# EUROPÄISCHE PATENTSCHRIFT

(11) **EP 0 786 602 B1**
(45) Veröffentlichungstag und Bekanntmachung des Hinweises auf die Patenterteilung: **24.03.1999**
(21) Anmeldenummer: 96120465.8
(22) Anmeldetag: 19.12.1996
(51) Int. Cl.: F16B 21/08

(54) **Vorrichtung zum lösbaren Verbinden von mindestens zwei Bauteilen, insbesondere von Bauteilen in einem Flugzeug**
Fitting for releasably connecting at least two structural components, especially structural elements in an aircraft
Dispositif d'assemblage amovible d'au moins deux éléments de construction, en particulier d'éléments de construction dans un avion

(30) Priorität: 26.01.1996 DE 19602828
(43) Veröffentlichungstag der Anmeldung: 30.07.1997
(73) Patentinhaber: DaimlerChrysler Aerospace Airbus Gesellschaft mit beschränkter Haftung, 21129 Hamburg (DE)
(72) Erfinder: Sönnichsen, Hans-Ketel, Dipl.-Ing., 21635 Jork (DE)
(74) Vertreter: Hansmann, Dierk, Dipl.-Ing.

(56) Entgegenhaltungen:
- DE-A- 3 512 872
- DE-A- 3 815 927
- DE-A-19 519 903
- US-A- 3 803 670

## Beschreibung

Die Erfindung betrifft eine Vorrichtung zum lösbaren Verbinden von mindestens zwei Bauteilen, insbesondere von Bauteilen in einem Flugzeug, mit einem Stift, der ein angeformtes Kopfteil und ein am anderen Ende des Stiftes angeformtes Verriegelungsteil aufweist, das Verriegelungsteil als Spreizkopf ausgebildet ist, der einen Absatz zum Stift aufweist und an der Stirnseite mit einer Aussparung versehen ist, die den Spreizkopf in zumindest zwei Teile teilt, wobei der Spreizkopf zum Überschieben eines als Sicherungsscheibe ausgebildeten Sicherungselementes zusammendrückbar ist und in Haltestellung der Spreizkopf entspannt und die Sicherungsscheibe am Absatz anlegbar ist.

Aus US-A-3 803 670 ist eine solche Befestigungsvorrichtung bekannt, die zum Verbinden von Platten dient und ohne eine Nutzung von Werkzeugen hergestellt werden kann und wiederverwendbar, haltbar und ökonomisch herstellbar ist. Aus DE-A-35 12 872 ist ein Spreizniet zum Verbinden von Bauteilen bekannt, bei dem zur Sicherung der Verbindung ein Stift einschlagbar oder eindrückbar ist. Hierbei wird mittels Kraftschluß die Sicherung hergestellt, wobei aber bei hohen Längsbelastungen die Gefahr des Lösens der Verbindung trotz Sicherung besteht.

In Flugzeugen werden für die Befestigung von Bauteilen üblicherweise Befestigungselemente verwendet, die hohen Belastungen ausgesetzt sind. Verwendet werden dabei vielfach zylinderförmige Stifte, an die jeweils ein Kopfteil angeformt ist und die mit Unterlegscheibe und Splint gesichert werden. Um eine lösbare Verbindung zu erreichen, wird der zylinderförmige Stift durch eine Bohrung der zu befestigenden Teile geführt. Am anderen Ende des Stiftes werden Unterlegscheiben und ein Splint zur Herstellung und Sicherung der Verbindung aufgebracht. Somit ist die hergestellte Verbindung auch bei hohen Längs- bzw. Querbelastungen gegen ein unbeabsichtigtes Lösen gesichert. Für die Herstellung, Sicherung sowie auch für die Lösung der Splintverbindung sind Werkzeuge notwendig, deren Handhabung vor allem in beengten Raumverhältnissen wie einem Flugzeug recht aufwendig sein kann. Die Anwendung von solchen lösbaren Verbindungen bedeutet demgemäß einen hohen Montageaufwand.

Aufgabe der vorliegenden Erfindung ist es daher, eine Vorrichtung der eingangs genannten Art zu schaffen, die kostengünstig und unaufwendig lösbare Verbindungen mit einer hohen Belastbarkeit ermöglicht, die ohne Werkzeug hergestellt, gesichert und wieder gelöst werden können. Der Montageaufwand ist zu minimieren, um trotz der Vielzahl der herzustellenden Verbindungen in einem Flugzeug kostengünstig zu fertigen. Um bei hohen Belastungen eine ausreichende Sicherheit gegen ein unbeabsichtigtes Lösen der Verbindung zu erreichen, ist insbesondere bei hohen Längsbelastungen ein Absprengen der Sicherungsscheibe zu verhindern.

Diese Aufgabe wird dadurch gelöst, daß ein Sicherheitsbügel vorgesehen ist, der in die Aussparung einsteckbar ist, wobei der Sicherheitsbügel aus einem Mittelteil besteht an dem sich zumindest ein Bügel anschließt und an den Bügelenden jeweils Einrasthaken zum Einhaken an der Sicherungsscheibe vorgesehen sind.

Dabei ist insbesondere von Vorteil, daß eine lösbare Verbindung für hohe Belastungen ohne Werkzeuge hergestellt, gesichert und wieder gelöst werden kann und nur ein geringer Montageraum notwendig ist. Die Montage wird vereinfacht und die Montagezeit gesenkt. Insbesondere bei hohen Längsbelastungen der Verbindung ist ein Absprengen des Sicherungsringes nicht mehr möglich.

Weiterbildungen und zweckmäßige Ausgestaltungen ergeben sich aus den Unteransprüchen 2 - 6.

Die Maßnahme gemäß dem Unteranspruch 2 ermöglicht, daß für die Einrasthaken an der Sicherungsscheibe ein fester Halt gewährleistet ist.

Mit der Weiterbildung gemäß dem Unteranspruch 3 ist der Spreizkopf leichter zusammendrückbar und somit das Herstellen der Verbindung einfacher gestaltet.

Die alternative Ausbildung des Mittelteils gemäß der Unteransprüche 4 und 5 kann entsprechend der Gestaltung der Aussparung Verwendung finden.

Mit der Maßnahme gemäß Anspruch 6 ist eine leichte Bauweise der Verbindungselemente gewährleistet, was insbesondere im Flugzeugbau bei einer Vielzahl dieser Verbindungen eine große Rolle spielt, um Gewichtsreduzierungen zu erreichen.

Die Erfindung wird nachstehend beschrieben, wobei die Ausbildung der Vorrichtung zum lösbaren Verbinden anhand der Zeichnung näher erläutert ist. In den Figuren sind gleiche Bauteile mit gleichen Bezugszeichen versehen.

Die Zeichnung zeigt
- in Fig. 1: einen zylinderförmigen Stift mit angeformten Kopf- und Verriegelungsteil in der Seitenansicht,
- in Fig. 2: den Stift gemäß Fig. 1 in der Ansicht von vorn,
- in Fig. 3: ein lösbare Verbindung von zwei Bauteilen unter Verwendung der Vorrichtung gemäß Figur 1,
- in Fig. 4: einen Sicherungsbügel als Sicherungselement der erfindungsgemäßen Vorrichtung,
- in Fig. 5: eine Sicherungsscheibe in einer zweiten Ausführungsform und
- in Fign. 6 u. 7: zwei Ausführungsbeispiele einer lösbaren Verbindung unter Verwendung einer zweiten Ausführungsform der erfindungsgemäßen Vorrichtung.

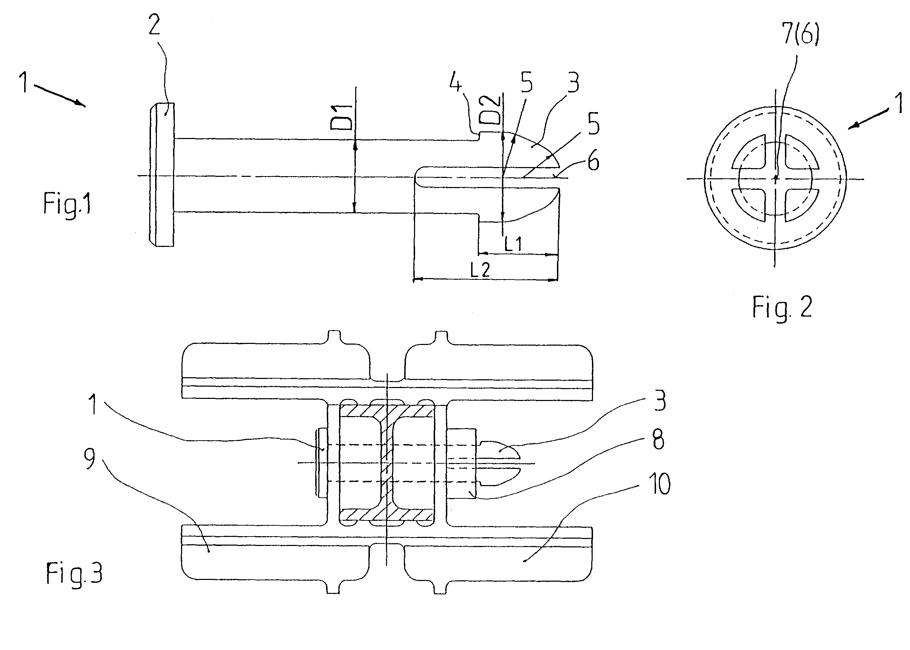

In den Fign. 1 und 2 ist ein Stift 1 in der Seitenansicht und in der Ansicht von vorn gezeigt, der aus dem Stand der Technik bereits für das lösbare Verbinden von mindestens zwei Bauteilen bekannt ist. Der Stift 1 besitzt vorzugsweise eine zylindrische Form und ist mit einem angeformten Kopfteil 2 und einem angeformten Verriegelungsteil 3 versehen. Der Stift 1 ist aus Kunststoff gefertigt, vorzugsweise Polyamid, und ist im Spritzgußverfahren herstellbar. Mit der Verwendung von Kunststoff ist eine leichte Bauweise gewährleistet, was insbesondere im Flugzeugbau eine große Rolle spielt, um Gewichtsreduzierungen zu erreichen. Auch Korrosionsprobleme treten mit der Verwendung von Polyamid nicht mehr auf.

Das am Stift 1 angeformte Verriegelungsteil 3 ist ebenfalls als ein zylindrisches Element ausgebildet. Es besitzt gegenüber dem Stiftdurchmesser D1 einen leicht vergrößerten Durchmesser D2. Damit entsteht ein Absatz 4 zwischen Stift 1 und Verriegelungsteil 3. Die Stirnseite des Verriegelungsteiles 3 ist zur Einsteckrichtung hin abgerundet bzw. abgeschrägt. Die Radien 5 sind so gewählt, daß ein leichtes Einführen des Stiftes 1 in die Bohrungen der zu verbindenden Bauteile gewährleistet ist und eine Sicherungsscheibe 8 (gezeigt in Fig. 3) leicht auf den Stift 1 aufsteckbar ist. Nach dem Aufstecken kann die Sicherungsscheibe 8 am Absatz 4 angelegt werden. Das Verriegelungsteil 3 ist zum Überschieben der Sicherungsscheibe 8 ferner stirnseitig mit einer Aussparung 6 versehen, die als Kreuzschlitz 7 geformt ist. Die Abmessungen des Kreuzschlitzes 7 sind so gewählt, daß das durch den Kreuzschlitz 7 viergeteilte Verriegelungsteil 3 soweit zusammendrückbar ist, daß die Sicherungsscheibe 8 über den Absatz 4 des Verriegelungsteiles 3 auf den Stift 1 aufschiebbar ist. Das Verriegelungsteil 3 ist somit als Spreizkopf ausgebildet. Denkbar wäre auch, statt des Kreuzschlitzes 7 einen Längsschlitz als Aussparung 6 vorzusehen. Um die Funktion eines Spreizkopfes zu erfüllen, ist der Schlitz 7 so tief in den Stift 1 eingebracht, das seine Länge L2 größer als die Länge des Verriegelungsteiles L1 ist. Der Durchmesser D2 des Verriegelungsteiles 3 kann somit durch das Zusammendrücken bis zum Durchmesser D1 des Stiftes 1 verkleinert werden.

In Fig. 3 ist eine lösbare Verbindung von zwei Bauteilen 9 und 10 unter Verwendung des Stiftes 1 mit Sicherungselement gezeigt. Um eine lösbare Verbindung zu erreichen, wird der zylinderförmige Stift 1 durch eine Bohrung der zu befestigenden Teile 9 und 10 geführt. Mit dem Einführen des Stiftes 1 wird der Spreizkopf 3 zusammengedrückt. Wenn das Verriegelungsteil 3 die Bohrung passiert hat, entspannt es sich wieder und der Stift 1 kann nicht ohne Krafteinwirkung aus der Bohrung heraus. Somit ist eine selbstsichernde, lösbare Verbindung entstanden. Vorzugsweise ist die Gesamtdicke der zu befestigenden Teile kleiner als die Vollmateriallänge des Stiftes 1, um den tragenden Querschnitt der Befestigung nicht durch die Aussparung 6 zu verringern. Um einen festen Sitz des Stiftes 1 in der Bohrung der Bauteile 9 und 10 zu erreichen, wird die Sicherungsscheibe 8 über den zusammengedrückten Spreizkopf 3 geschoben. Die Scheibe 8 rastet hinter dem Absatz 4 ein und ermöglicht somit einen Längenausgleich des Stiftes 1. Mit dem entspannten Spreizkopf 3 ist somit die gesamte Verbindung gesichert. Die Verbindung ist in diesem Zustand nur wieder lösbar, wenn der Spreizkopf 3 soweit zusammengedrückt wird, daß die Sicherungsscheibe 8 wieder abziehbar ist und der Stift 1 mit zusammengedrücktem Spreizkopf 3 wieder aus der Bohrung herausgezogen wird. Für das Zusammendrücken des Spreizkopfes 3 ist kein zusätzliches Montagewerkzeug notwendig. Vorzugsweise wird vorgeschlagen, mit einer weiteren Sicherungsscheibe, deren Innendurchmesser dem Duchmesser D1 des Stiftes 1 entspricht, den Spreizkopf 3 zusammenzudrücken und somit ein leichtes Lösen der Verbindung zu erreichen.

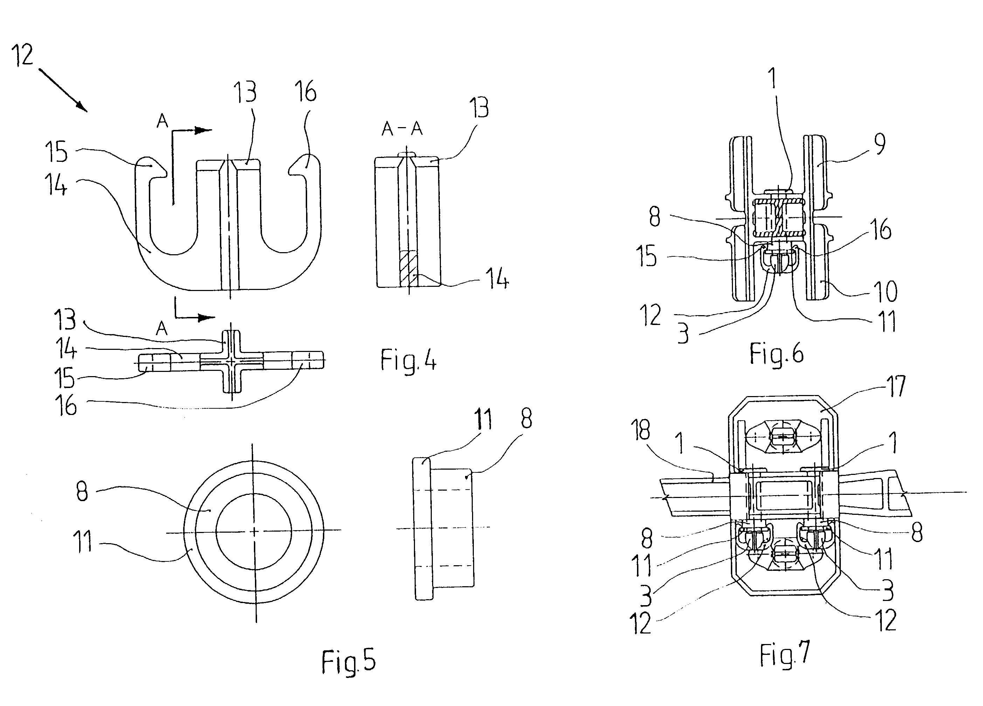

Ein weiteres Sicherungselement für die erfindungsgemäße Vorrichtung ist in Fig. 4 in drei Ansichten dargestellt. Dieses Sicherungselement ist ein Sicherheitsbügel 12, der angewendet wird, wenn eine hohe Längsbelastung einer wie in Fig. 3 gezeigten Verbindung befürchten läßt, daß die Sicherungsscheibe 8 abgesprengt wird und sich somit die Gesamtverbindung löst. Der Sicherheitsbügel 12 besteht aus einem Mittelteil 13, das zumindest teilweise entsprechend der Form der Aussparung 6 geformt ist und in diese einführbar ist. In der gezeigten Ausführung ist das Mittelteil 13 kreuzförmig gestaltet. Dieses Mittelteil 13 kann in den Kreuzschlitz 7 des Verriegelungsteiles 3 eingeführt werden. Am herausragenden Ende des Mittelteils 13 ist ein bogenförmiger Bügel 14 angeordnet. An den Bügelenden sind Einrasthaken 15 und 16 vorgesehen, die als Zusatzsicherung an der Sicherungsscheibe 8 einhaken und somit ein Verlieren des Sicherungselementes unterbinden und damit ein unbeabsichtigtes Lösen der Gesamtverbindung durch Kräfte in Längsrichtung verhindern. Der Sicherheitsbügel 12 ist vorzugsweise auch aus Polyamid gefertigt. Mit diesem Material ist es gewährleistet, daß die Bügelenden sowie die Einrasthaken ausreichend zäh und flexibel sind, um Ein- und Ausrastvorgänge ohne Ermüdung und Beschädigung zu überstehen.

In Fig. 5 ist die für das zusätzliche Sicherungselememt notwendige Änderung an der Sicherungsscheibe 8 ersichtlich. Die Scheibe 8 ist mit einem Kragen 11 versehen, an dem die Einrasthaken 15 und 16 einhaken können.

In den Fign. 6 und 7 sind zwei Ausführungsbeispiele einer lösbaren Verbindung dargestellt, die das zusätzliche Sicherungselement 12 verwenden. Wie für die in Fig. 3 gezeigte lösbare Verbindung, wird der zylinderförmige Stift 1 durch eine Bohrung der zu befestigenden Teile 9, 10 bzw. 17, 18 geführt. Mit dem Einführen des Stiftes 1 wird der Spreizkopf 3 zusammengedrückt. Wenn der Spreizkopf 3 die Bohrung passiert hat, entspannt er sich wieder und der Stift 1 kann nicht ohne Krafteinwirkung aus der Bohrung heraus. Somit ist eine selbstsichernde, lösbare Verbindung entstanden. Die Sicherungsscheibe 8 wird über den Spreizkopf 3 geschoben, der sich anschließend entspannt und somit die Schiebe 8 zurückgehält. Für die zusätzliche Sicherung in Längsrichtung der Verbindung kommt nun der Sicherheitsbügel 12 zum Einsatz. Das Mittelteil 13 des Bügels 12 wird in den Kreuzschlitz 7 des entspannten Spreizkopfes 3 eingeführt. Damit wird verhindert, daß der Spreizkopf 3 unvorhergesehenerweise zusammengedrückt wird und somit die Scheibe 8 vom Stift 1 rutscht und die Verbindung sich löst. Der Sicherheitsbügel 12 wird in seiner Position mittels der beiden Einrasthaken 15, 16 gehalten, die am Kragen 11 der Sicherheitsscheibe 8 eingerastet sind.

Zum Lösen der Verbindung wird zuerst der Sicherheitsbügel 12 aus der Ausparung 6 entfernt, indem die Bügelenden des Bügels 14 hochgedrückt werden und so die Einrasthaken 15, 16 aus dem Kragen 11 ausrasten. Die Verbindung ist in diesem Zustand nun wieder - wie zur Beschreibung der Fig. 3 schon erläutert - lösbar, d.h. der Spreizkopf 3 wird soweit zusammengedrückt, daß die Sicherungsscheibe 8 wieder abziehbar ist und der Stift mit zusammengedrücktem Spreizkopf 3 wieder aus der Bohrung herausgezogen werden kann.

Die Nutzung eines Montagewerkzeuges ist auch in dieser Ausführungsform der Vorrichtung nicht notwendig.

### Bezugszeichenliste

- 1 -: Stift
- 2 -: Kopfteil
- 3 -: Verriegelungsteil (= Spreizkopf)
- 4 -: Absatz am Verriegelungsteil
- 5 -: Abrundungen am Verriegelungsteil
- 6 -: Aussparung
- 7 -: Kreuzschlitz
- 8 -: Sicherungsscheibe
- 9, 10 -: erstes und zweites Bauteil
- 11 -: Kragen
- 12 -: Sicherheitsbügel
- 13 -: Mittelteil
- 14 -: bogenförmiger Bügel
- 15, 16 -: Einrasthaken an den Bügelenden
- 17, 18 -: drittes und viertes Bauteil

## Patentansprüche

1. Vorrichtung zum lösbaren Verbinden von mindestens zwei Bauteilen, insbesondere von Bauteilen in einem Flugzeug, mit einem Stift (1), der ein angeformtes Kopfteil (2) und ein am anderen Ende des Stiftes angeformtes Verriegelungsteil (3) aufweist, wobei das Verriegelungsteil als Spreizkopf ausgebildet ist, der einen Absatz (4) zum Stift aufweist und an der Stirnseite mit einer Aussparung (6) versehen ist, die den Spreizkopf in zumindest zwei Teile teilt, wobei der Spreizkopf zum Überschieben eines als Sicherungsscheibe (8) ausgebildeten Sicherungselementes zusammendrückbar ist und in Haltestellung der Spreizkopf entspannt und die Sicherungsscheibe am Absatz anlegbar ist, **dadurch gekennzeichnet, daß** ein Sicherheitsbügel (12) vorgesehen ist, der in die Aussparung (6) einsteckbar ist, wobei der Sicherheitsbügel (12) aus einem Mittelteil (13) besteht an dem sich zumindest ein Bügel (14) anschließt und an den Bügelenden jeweils Einrasthaken (15, 16) zum Einhaken an der Sicherungsscheibe (8) vorgesehen sind.

2. Vorrichtung nach Anspruch 1,
**dadurch gekennzeichnet, daß**
die Sicherungsscheibe (81 am äußeren Umfang mit einem Kragen (11) versehen ist, an dem die Einrasthaken (15, 16) einrastbar sind.

3. Vorrichtung nach einem der Ansprüche 1 oder 2,
**dadurch gekennzeichnet, daß**
die Aussparung (6) als Kreuzschlitz (7) ausgebildet ist.

4. Vorrichtung nach einem der Ansprüche 1 bis 3,
**dadurch gekennzeichnet, daß**
das Mittelteil (13) kreuzförmig ausgebildet ist.

5. Vorrichtung nach einem der Ansprüche 1 bis 3,
**dadurch gekennzeichnet, daß**
das Mittelteil (13) als flacher Steg ausgebildet ist.

6. Vorrichtung nach einem der vorangegangenen Ansprüche,
**dadurch gekennzeichnet, daß**
als Material für die Vorrichtung Kunststoff, vorzugsweise Polyamid, einsetzist.

## Claims

1. Device for the detachable connection of at least two components, in particular components in an aircraft, which device has a pin (1) which has a moulded-on head part (2) and a locking part (3) moulded on at the other end of the pin, the locking part being constructed as an expanding head which has an offset (4) in relation to the pin and is provided, on the end face, with a recess (6) which divides the expanding head into at least two parts, and the expanding head being capable of being compressed for the purpose of pushing over a securing element constructed as a securing washer (8) and being relaxed when the expanding head is in the retaining position, and the securing washer being capable of being located against the offset, **characterised in that** a safety clip (12) is provided which can be inserted in the recess (6), the safety clip (12) consisting of a central part (13), adjoining which is at least one clip (14), and snap-in hooks (15, 16) for hooking onto the securing washer (8) being provided at the ends of the clip in each case.

2. Device according to claim 1,
**characterised in that**
the securing disc (8) is provided, on the outer periphery, with a collar (11) onto which the snap-in hooks (15, 16) can be snapped.

3. Device according to one of claims 1 or 2,
**characterised in that**
the recess (6) is constructed as a cross-slot (7).

4. Device according to one of claims 1 to 3,
**characterised in that**
the central part (13) is of cross-shaped construction.

5. Device according to one of claims 1 to 3,
**characterised in that**
the central part (13) is constructed as a shallow web.

6. Device according to one of the preceding claims,
**characterised in that**
plastic, preferably polyamide, can be used as the material for the device.

## Revendications

1. Dispositif d'assemblage amovible d'au moins deux éléments de construction, en particulier d'éléments de construction dans un avion, composé d'une tige (1) qui présente une partie de tête (2) intégrée d'une seule pièce et, à son autre extrémité, une partie de verrouillage (3) intégrée d'une seule pièce, la partie de verrouillage se présentant sous la forme d'une tête à expansion en saillie (4) par rapport à la tige et pourvue sur sa face frontale d'un évidement (6) qui sépare la tête à expansion en au moins deux parties, la tête à expansion pouvant être comprimée pour faire glisser un élément d'arrêt se présentant sous la forme d'une rondelle d'arrêt (8), en position d'arrêt la tête à expansion étant relâchée et la rondelle d'arrêt pouvant reposer sur la saillie caractérisé en ce qu'il est prévu un étrier de sûreté (12) qui peut être enfoncé dans l'évidement (6), l'étrier de sûreté (12) étant constitué d'une partie centrale (13) à laquelle se raccorde au moins une branche (14) et des crochets d'encliquetage (15, 16) étant prévus respectivement aux extrémités de la branche afin de permettre l'accrochage avec la rondelle d'arrêt (8).

2. Dispositif suivant la revendication 1, caractérisé en ce que la rondelle d'arrêt (8) est pourvue à sa périphérie extérieure d'un col (11) sur lequel les crochets d'encliquetage (15, 16) peuvent s'encliqueter.

3. Dispositif suivant la revendication 1 ou 2, caractérisé en ce que l'évidement (6) se présente sous la forme d'une fente cruciforme (7).

4. Dispositif suivant l'une quelconque des revendications 1 à 3, caractérisé en ce que la partie centrale (13) est en forme de croix.

5. Dispositif suivant l'une quelconque des revendications 1 à 3, caractérisé en ce que la partie centrale (13) se présence sous la forme d'une nervure plate.

6. Dispositif suivant l'une quelconque des revendications précédentes, caractérisé en ce qu'on peut utiliser le plastique, de préférence le polyamide, comme matériau pour le dispositif.
